# EUROPEAN PATENT APPLICATION

(11) **EP 1 642 671 A1**
(43) Date of publication of application: **05.04.2006**
(21) Application number: 04746639.6
(22) Date of filing: 30.06.2004
(51) Int. Cl.: B23P 19/00, B23P 21/00, B25J 13/00, B62D 65/02, B62D 65/18

(54) **PARTS CONVEYING AND ATTACHING METHOD AND DEVICE THEREFOR**

(30) Priority: 04.07.2003 JP 2003192102
(71) Applicant: HONDA MOTOR CO., Ltd., Tokyo 107-8556 (JP)
(72) Inventor: MARUO, Masaru c/o HONDA ENGINEERING CO., LTD., Sayama-shi, Saitama 3501381 (JP); OZAWA, Tetsuya c/o HONDA ENGINEERING CO., LTD., Sayama-shi, Saitama 3501381 (JP); OSADA, Atsushi c/o HONDA ENGINEERING CO., LTD., Sayama-shi, Saitama 3501381 (JP); KATAMINE, Takeshi c/o HONDA ENGINEERING CO., LTD., Sayama-shi, Saitama 3501381 (JP)
(74) Representative: Rupp, Christian
(86) International application number: PCT/JP2004/009170
(87) International publication number: WO 2005/002783

(57) **Abstract**

Mounting operation is efficiently performed by automatically conveying parts and assisting only an operation to mount the parts to a mounted body. A parts conveying/mounting device 1 comprises a power assist mechanism on a self-traveling carrier. When receiving a tank T at a parts reception position SP, the parts conveying/mounting device 1 travels at high speed to a main line ML along a travel guiding route K, and self-travels in the conveyance direction of a vehicle body W synchronously with the flow of the vehicle body W, in a state that the tank T is conveyed to the vicinity of a mounting portion of the vehicle body W. A worker MS performs positioning of the tank T via the power assist mechanism, and mounts the tank to the vehicle body W.

## Description

### Technical Field

The present invention relates to a parts conveying/mounting method in which parts are arranged to be automatically conveyed synchronously with the flowof amounted body and to be mounted by assisting the work force of a worker, and also relates to a device for effecting the method.

### Background Art

Conventionally, for example in a vehicle assembling line and the like, inmounting various kinds of parts while conveying a mounted body such as a vehicle body, there is known a technique in order to reduce the labor of a worker when the parts are heavy, in which technique the parts are conveyed to a mounting position by using a reaction force imparting type work assisting device capable of reducing the load as if a lightweight article were conveyed, and mounted to the mounting position (for example, refer to Patent Document 1).

The reaction force imparting type work assisting device is an assisting device in which a heavy article is supported by a manipulator, and the force indirectly applied to the heavy article by a worker is detected by a force sensor, so that the manipulator is controlled on the basis of the detected information to reduce the manual load.

Patent Document 1: Japanese Patent Laid-Open No. 2000-84881

### Disclosure of the Invention

### Problems to be Solved by the Invention

However, in the above described technique, the worker is required to work during the work process while manually holding the work assisting device, so that it is difficult for the worker to work efficiently.

### Means for Solving the Problems

Accordingly, an object of the present invention is to make it possible to efficiently perform the mounting work by automating the conveyance of parts and assisting only the work of mounting the parts to a mounted body.

In order to solve the above described problem, according to the present invention, there is provided a parts conveying/mounting method in which parts are conveyed from a parts feeding section to a vicinity of a mounting portion of a mounted body flowing on a production line and mounted to the mounting portion, comprising: a parts reception process in which parts are received from the parts feeding section by parts support means; an automatic conveyance process in which automatic conveyance means is operated to move the received parts to the vicinity of the mounted body, to continue to move synchronously with the flow of the mounted body, and is further operated to return to the parts feeding section after mounting the parts; a parts approach process in which in the automatic conveyance process, conveyance means mounted on the automatic conveyance means and connected to the parts support means is automatically moved to the vicinity of the mounting portion of the mounted body; and a mounting process in which the parts moved to the vicinity of the mounted body in the parts approach process are made into contact with the mounting portion and fixed by manually handling the conveyance means through assist conveyance.

In the parts conveying/mounting method according to the present invention, parts are automatically conveyed to the vicinity of the mounted body and moved synchronously with the flow of the mounted body, so that a worker need only make the parts held in the vicinity of the mounted body into contact with the mounting portion and fixed. When the parts are made into contact with the mounting portion, the force needed to move the parts is reduced by the assist mode.

On the other hand, according to the present invention, there is provided a parts conveying/mounting device in which parts are conveyed from a parts feeding section to a vicinity of a mounting portion of a mounted body flowing on a production line and mounted to the mounting portion, comprising: parts support means which freely supports the parts in a state sufficiently resistible to conveyance from the parts feeding section to the mounting portion of the mounted body; first conveyance means constituted to travel on a floor surface of work place of a worker via an actuator and to bring the parts supportmeans roughly in the vicinityof the parts to bemounted; second conveyance means constituted to be connected with the parts support means and the first conveying means and to convey the parts support means to the mounting portion of the mounted body via an actuator; and control means by which the first conveyance means is controlled to automatically move from the parts feeding section to the production line, to continue to move synchronously with the flow of the mounted body on the production line, and further to automatically move to the parts feeding section after completion of an operation to release the parts from the parts support means; by which the actuator is controlled to make the second conveyance means to automatically move the parts supported by the parts support means to the vicinity of the mounting portion of the mounted body during the conveyance performed by the first conveyance means synchronously with the flow of the mounted body, by which the actuator is controlled to make the parts support means automatically escape and move from the mounting portion of the parts to be mounted after completion of the operation to release the parts from the parts support means, and by which the actuator is further controlled to switch a conveyance mode of the second conveyance means to an assist mode after the second conveyance means makes the parts support means automatically move to the vicinity of the parts to be mounted.

In the parts conveying/mounting device according to the present invention, parts are conveyed to the vicinity of the mounted body to continue to move synchronously with the flow of the mounted body, so that the worker need only make the parts held in the vicinity of the mounted body into contact with the mounting portion and fixed. When the parts are made into contact with the mounting portion, the force necessary for moving the parts is reduced by the assist mode.

### Advantages of the Invention

According to the present invention as described above, the parts are automatically conveyed to the vicinity of the mounted body so as to move synchronously with the flow of the mounted body, as a result of which the worker need only perform the positioning and fixing of the parts. When the parts are moved so as to be positioned, the work force is reduced by the assist mode. Thereby, the parts are efficiently mounted. Further, the remaining time can be used to perform the other operation.

### Brief Description of the Drawings

Figure 1 is an explanatory view of a series of steps in which a tank as a part is automatically conveyed by using a parts conveying/mounting device according to the present invention, to be mounted to a vehicle body as a mounted body;
Figure 2 is an explanatory view of a sub-step and a tank reception step in a line side;
Figure 3 is an explanatory view of a tank mounting step in a main line;
Figure 4 is a structural drawing of the parts conveying/mounting device according to the present invention;
Figure 5 is ablockdiagramof the parts conveying/mounting device according to the present invention;
Figure 6 is a flow chart (No. 1) showing operation contents in each of the steps of a parts conveying/mounting method according to the present invention;
Figure 7 is a flow chart (No. 2) showing operation contents in each of the steps of the parts conveying/mounting method according to the present invention; and
Figure 8 is a flow chart (No. 3) showing operation contents in each of the steps of the parts conveying/mounting method according to the present invention.

### Best Mode for Carrying Out the Invention

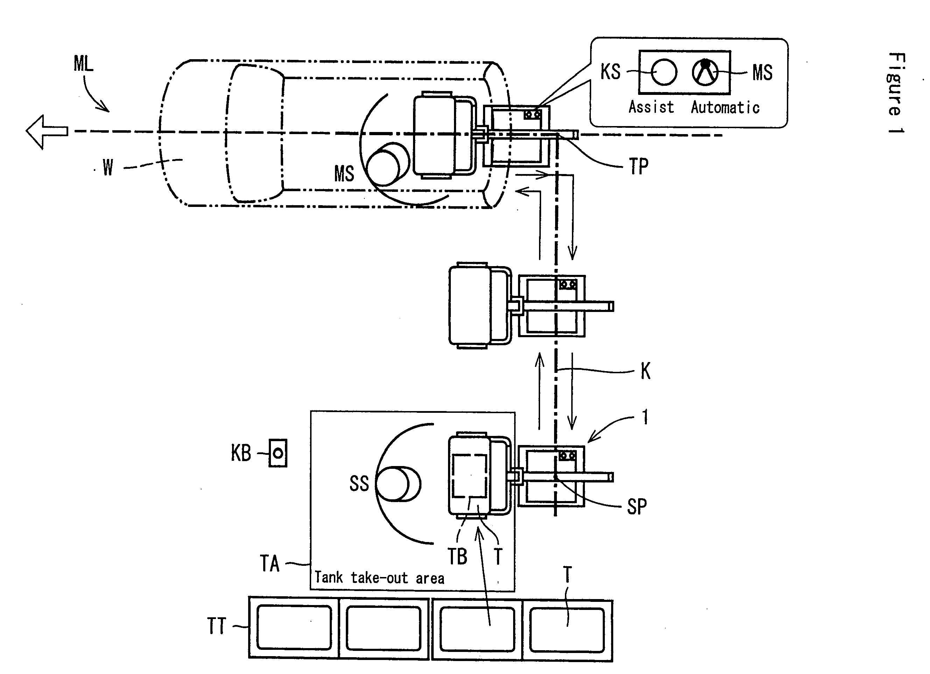

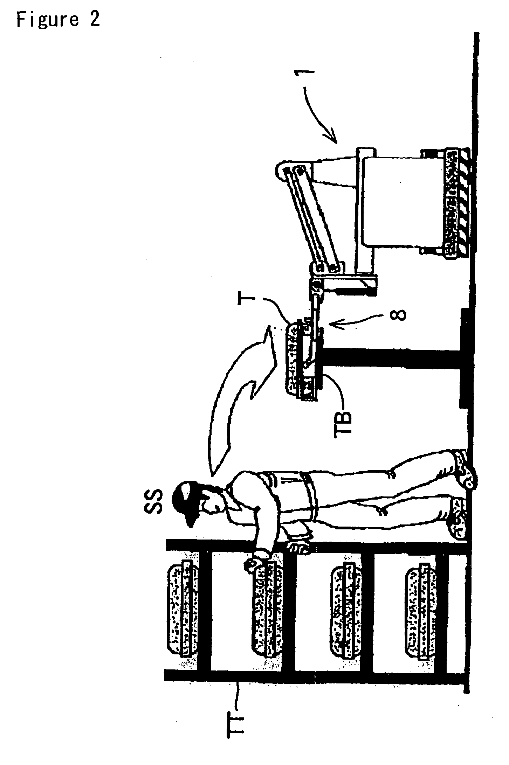

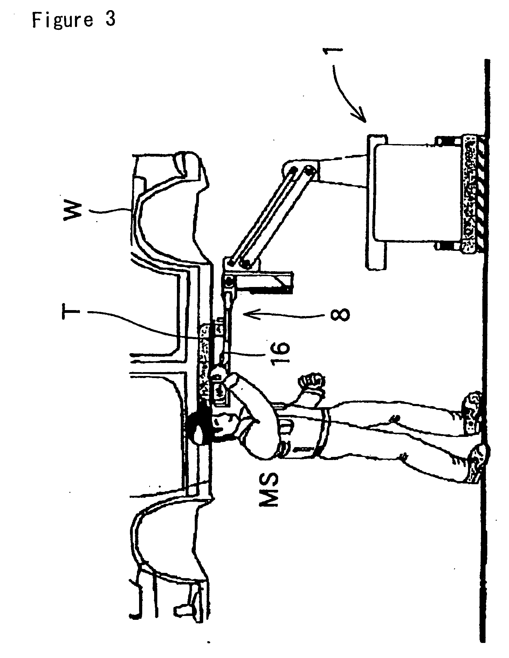

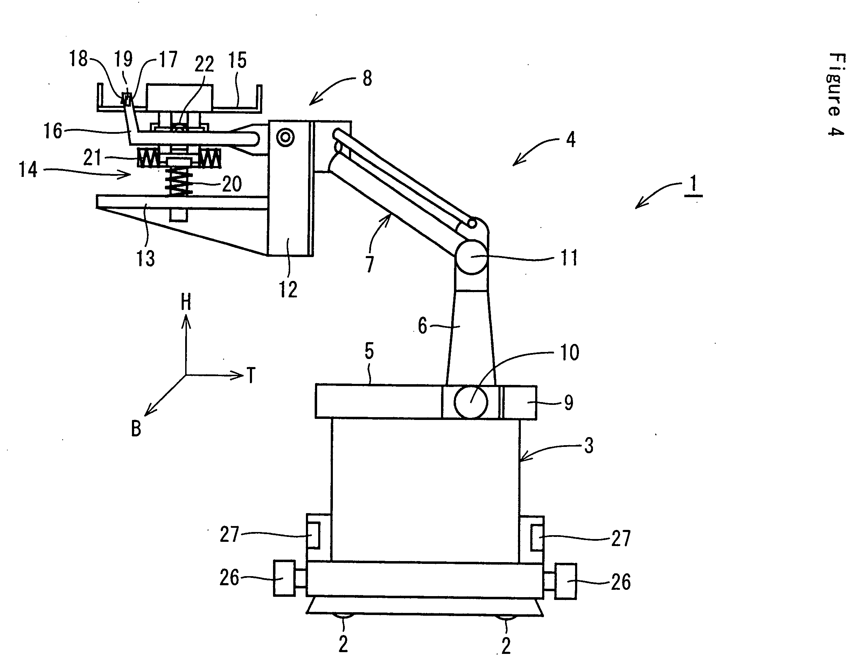

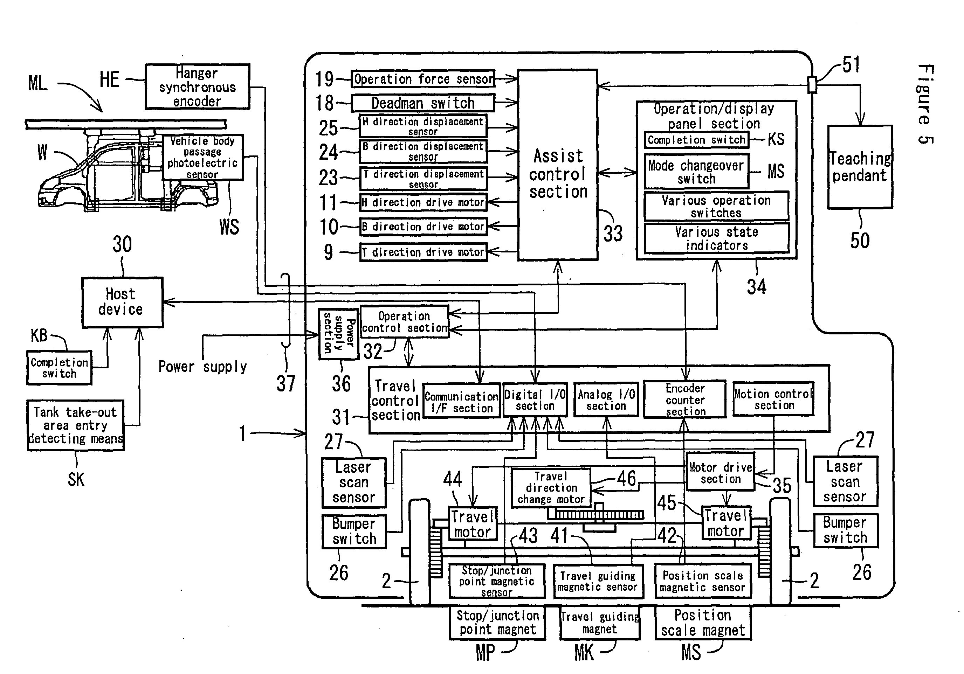

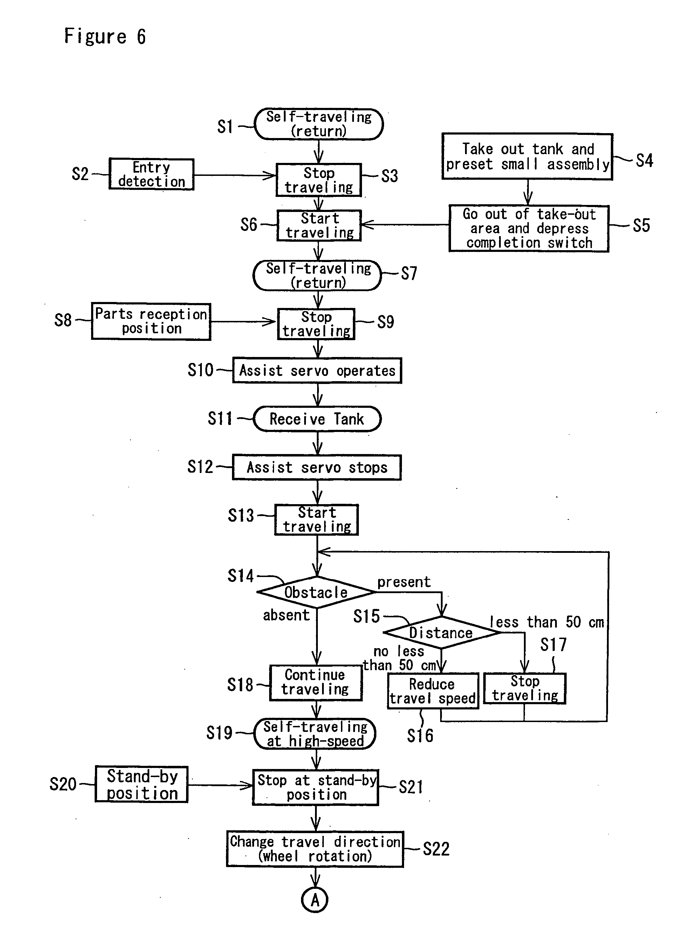

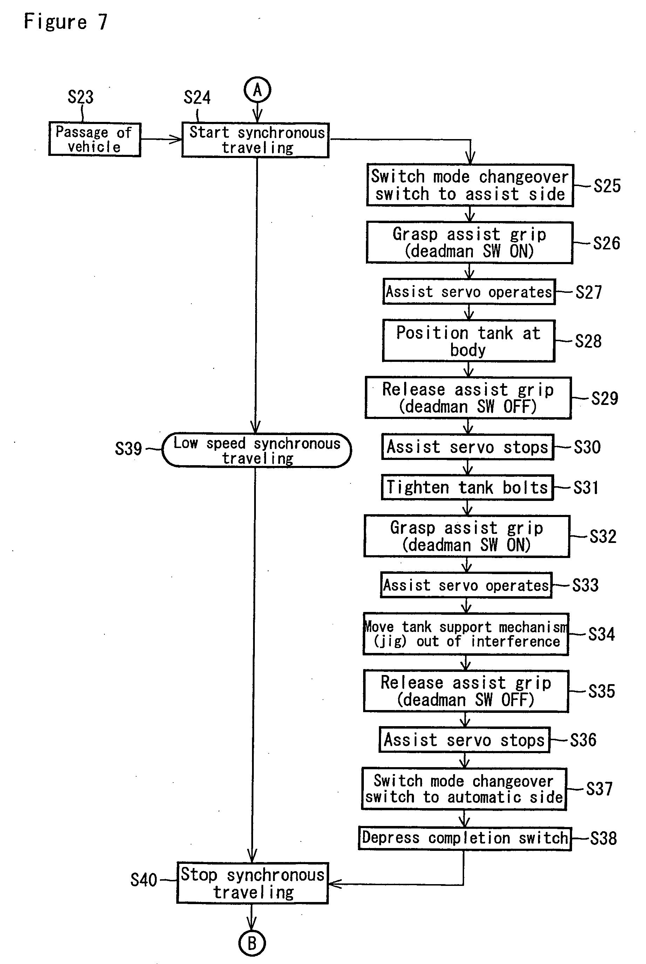

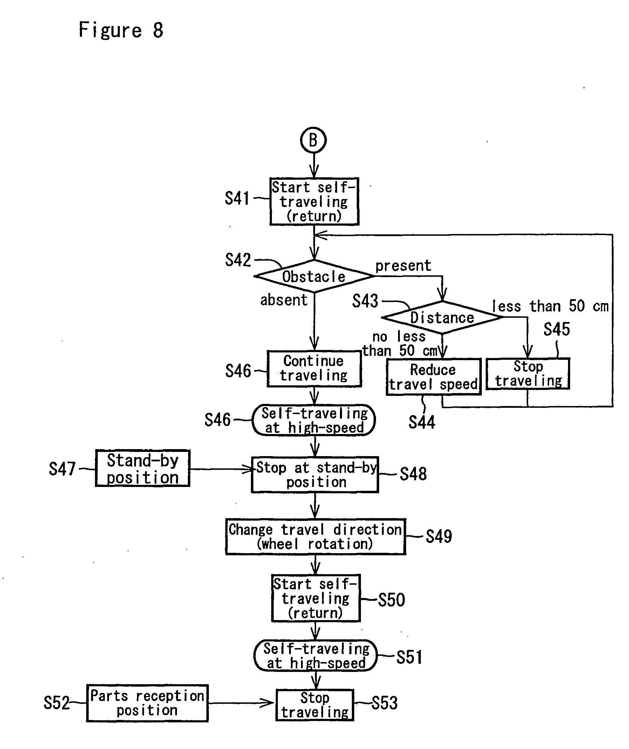

In the following, embodiments according to the present invention will be described with reference to the accompanying drawings. Figure 1 is an explanatory view of a series of steps in which a tank as a part is automatically conveyed by using a parts conveying/mounting device according to the present invention, to be mounted to a vehicle body as a mounted body. Here, Figure 1 shows a plane of a main line and a line side. Figure 2 is an explanatoryviewof a sub-step and a tank reception step in the line side. Figure 3 is an explanatory view of a tank mounting step in the main line. Figure 4 is a structural drawing of the parts conveying/mounting device. Figure 5 is a block diagram of the parts conveying/mounting device. Figure 6 to Figure 8 are flow charts showing operation contents in each of the steps of a parts conveying/mounting method.

As shown in Figure 1, in the main line ML, vehicle body (mounted body) W shown by a virtual line is made to flow in the direction of the thick arrow shown in the figure at a constant speed (for example 0.1m/s) in a state of being hung by a conveyor apparatus (not shown). In the line side (lower side in Figure 1), there are provided a tank placing base (parts feeding section) TB and a tank storage rack TT.

As shown in Figure 2, a worker SS of a sub-step takes out a tank T from the tank storage rack TT, and transfers the tank onto the tank placing base TB to perform a small assembly operation. When the worker SS of the sub-step confirms that the tank T is placed at a predetermined position on the placing base TB, goes out of the tank take-out area TA shown in Figure 1 to depress a completion switch (push-button switch) KB.

When the completion switch KB is depressed, a tank reception request instruction is fed to a self-traveling parts conveying/mounting device (power assist device) 1 via a host device and the like. When the entry of a person into the tank take-out area TA is detected by tank take-out area entry detecting means SK (see Figure 5) consisting of a mat switch (floor switch) and a photoelectric area sensor and the like, which are provided in the tank take-out area, the entry information is fed to the parts conveying/mounting device 1 via the host device and the like (or directly). When the entry of a person into the tank take-out area TA is detected during the tank receiving operation, the parts conveying/mounting device 1 suspends its operation. When the entry of a person into the tank take-out area TA is detected by the tank take-out area entry detecting means SK, the parts conveying/mounting device 1 traveling toward a parts reception position TP reduces the travel speed and thereafter stops the traveling at a spot of a predetermined distance ahead of the parts reception position TP (a spot on the side of the main line ML from the tank take-out area TA).

When receiving the tank T placed on the tank placing base TB by moving a tank support mechanism 8 upward (see Figure 2), the parts conveying/mounting device 1 travels along a travel guiding route K consisting of magnets laid on the floor to the main line ML at a high speed (for example 0.6 m/s), and thereafter temporarily stops at a stand-by position TP.

A vehicle body passage photoelectric sensor WS for detecting passage of a vehicle body W and a hanger synchronous encoder HE for detecting position of a hunger are provided for the main line as shown in Figure 5. Each of output signals of the vehicle body passage photoelectric sensor WS and the hanger synchronous encoder HE is fed to the parts conveying/mounting device 1.

The parts conveying/mounting device 1 stands by at the standby position TP in a state where the travel direction is changed. When passage of the vehicle body W is detected on the basis of the output of the vehicle body passage photoelectric sensor WS, the parts conveying/mounting device 1 travels synchronously with the flow of the vehicle body W on the basis of the output signal of the hanger synchronous encoder HE. Here, the parts conveying/mounting device 1 recognizes a tank mounting position on the basis of vehicle type information (or tank mounting position information) fed via the host device 30, and automatically travels synchronously with the flow of the vehicle body W so as to maintain a predetermined positional relationship between the tank mounting position of the vehicle body W and the tank T. The parts conveying/mounting device 1 raises the support position of the tank T to make the tank T close to the mounting position of the vehicle body W and continues the synchronized travel while maintaining the positional state.

As shown in Figure 1, a worker MS of the main line switches a mode change over switch of the parts conveying/mounting device 1 from the automatic side to the assist side. Then, as shown in Figure 3, the worker MS operates an operation lever 16 to make the tank in contact with the tank mounting position of the vehicle body W, while receiving power assist in moving the tank T, and thereafter releasing the hand from the operation lever. Even when the hand is released from the operation lever, the self-travelingpower assist device 1 maintains the position of the tank T, so that the worker MS of the main line mounts the tank T to the vehicle body W by using, for example, a metallic band and the like and fixes the tank T by tightening tank bolts via the metallic band and the like. The worker MS of the main line can use both hands, and hence, can efficiently perform the mounting operation of the tank T.

When completing the mounting operation of the tank T to the vehicle body W, the worker MS of the main line grasps the operation lever 16 to move the tank support mechanism 8 downward (to a region in which the tank T does not interfere with the vehicle body W). Then, the worker MS of the main line switches the mode changeover switch MS to the automatic side and thereafter depresses a completion switch KS. Noted that when the worker MS of the main line depresses the completion switch KS, the parts conveying/mounting device 1 may be arranged to automatically move the tank support mechanism 8 downward (to a region in which the tank T does not interfere with the vehicle body W). Thereby, the workload of the worker MS of the main line can be further reduced.

When the completion switch KS is depressed, the parts conveying/mounting device 1 stops low-speed synchronous travel, and travels in the return direction (the direction reverse to the flow direction of the vehicle body W) to temporarily stop at the stand-by position TP. Then, the parts conveying/mounting device 1 changes the travel direction and starts self-traveling at high speed to return to the parts reception position SP.

In this way, the parts conveying/mounting device 1 repeats reception of the tank T, high-speed conveyance to the main line, low-speed synchronous travel in the main line, and return travel after mounting of the tank T. The tank T is automatically conveyed to the vicinity of the vehicle body W by the parts conveying/mounting device 1, so that the worker MS of the main line can efficiently perform mounting operation of the tank T only by positioning the tank T in the assist mode.

Figure 4 is a structural drawing of the parts conveying/mounting device according to the present invention. The parts conveying/mounting device 1 is constituted by providing a power assist mechanism 4 in the upper part of a self-traveling carrier body 3 provided with a plurality of traveling wheels 2, 2. The power assist mechanism 4 consists of an arm support base 6 vertically provided for a table 5 movable in two directions T, B orthogonal to each other, an arm 7 rotatably mounted to the arm support base 6, and the tank support mechanism 8 connected to the tip of the arm 7. The table 5 is moved in the T direction by a T direction drive motor 9. The table 5 is also moved in the B direction by a B direction drive motor 10. The arm 7 is rotated by an H direction drive motor 11.

The tank support mechanism 8 comprises a vertical section 12 linked to the tip of the arm 7, a horizontal section 13 mounted to the vertical section 12, a tank support section 15 mounted to the horizontal section 13 via a floatingmechanism 14, and the operation lever 16 mounted to the vertical section 12 (or the horizontal section 13). A grip section (assist grip) 17 at the tip of the operation lever 16 is provided with a deadman switch 18 and an operation force sensor 19.

The floating mechanism 14 holds the tank supporting section 15 movably in three axial directions (H, T, B). The floating mechanism 14 consists of a slide mechanism for three axial directions, floating springs 20, 21, 22 for each direction, and three displacement sensors (workpiece reaction force sensors) 23, 24, 25 for detecting the displacement in each axial direction (see Figure 5).

In the lower part of the carrier body 3, a pair of bumper switches 26, 26 which operate at the time of contacting an obstacle or the like, and a pair of laser scanner sensors 27, 27 searching an obstacle or the like in a front part in the travel direction are provided, respectively.

Figure 5 is a block diagram of the parts conveying/mounting device according to the present invention. The parts conveying/mounting device 1 comprises a travel control section 31, an operation control section 32, an assist control section 33, an operation/display panel section 34, a motor drive section 35 and a power supply section 36. Reference numeral 37 denotes a movable cable, through which electric power, various kinds of signals and information are supplied. Noted that a battery may be mounted in the carrier body 3 so as to make transmission and reception of various signals and information wirelessly performed. In this case, the movable cable 37 becomes unnecessary.

The present embodiment is configured so as to make serial data communication performed between the host device 30 and the parts conveying/mounting device 1. Then, vehicle kind information (vehicle type information and information about the tank mounting position) is arranged to be fed from the host device 30 to the parts conveying/mounting device 1, while depression information of the completion switch KB indicating that the preset operation of the tank in the line side is completed, and entry detection information of the tank take-out area entry detecting means SK are arranged to be fed to the host device 30. Further, the operation state of the parts conveying/mounting device 1, and abnormality information at the time of occurrence of abnormality are arranged to be fed from the parts conveying/mounting device 1 to the host device 30.

The travel control section 31 is constituted by using a microcomputer system, and comprises a communication I/F (interface) section, a digital I/O (input output) section, an analog I/O (input output) section, encoder/counter section, motion control section and the like.

As shown in Figure 1, travel guiding magnets MK which form the travel guiding route K are laid on the floor of the tank mounting process. Further, position scale magnets MS are laid along the travel guiding route K. Further, at the parts reception position SP and the temporary stop position TP, there are provided stop/junction point magnets MP which indicate these positions.

For the bottom portion of the parts conveying/mounting device 1 (carrier body 3) , there are provided a travel guiding magnetic sensor 41, a position scale magnetic sensor 42 and a stop/junction point magnetic sensor 43 for detecting each of the magnets MK, MS, MP.

The travel control section 31 recognizes the travel path K on the basis of detection outputs of the travel guiding magnetic sensor 41, and makes the carrier body 3 travel along the travel path K. The travel control section 31 recognizes the travel distance and the present position by counting detection outputs of the position scale magnetic sensors 42. Also, the travel control section 31 successively calculates the travel speed to control the rotation speed of each of the travel motors 44, 45 so that the rotation speedbecomes a target speed. When the travel direction is changed, the travel control section 31 drives a travel direction change motor 46 to change the travel direction.

When one of the bumper switches 26 operates, the travel control section 31 stops each of the travel motors 44, 45. When an obstacle is detected by the laser scan sensor 27 in the travel direction, the travel control section 31 reduces the travel speed in accordance with the distance to the obstacle or stops traveling.

The operation control section 32 is constituted by utilizing a microcomputer system. The operation control section 32 respectively monitors the operation of the travel control section 31 and the assist control section 33, and also performs control of cooperation operation and sequence operation between the travel control section 31 and the assist control section 33. Noted that the operation control section 32 and the travel control section 31 may be constituted by a single microcomputer system. Further, the operation control section 32, the travel control section 31 and the assist control section 33 may be constituted by a single microcomputer system.

The assist control section 33 is constituted by utilizing a microcomputer system. The assist control section 33 adjusts the support position of the tank by controlling the rotation of each of the drive motors 9, 10, 11. When the mode changeover switch MS is set to the assist mode, the assist control section 33 controls the operation of each of the drive motors 9, 10, 11 on the basis of the detection output of the operation force sensor 19 to feed the assist force (perform power assist) when the tank is moved. The operation force sensor 19 uses sensors detecting the operation force in three axial directions (directions of T, B, H), respectively. Specifically, the operation force in each direction is arranged to be detected by using at least three pressure sensors and load cells. The assist control section 33 controls the work assist force (assist force) fed by each of the drive motors 9, 10, 11, corresponding to the operation force in each direction.

The assist control section 33 monitors the output of each of the displacement sensors 23, 24, 25. When the displacement for example in the H direction is detected in the assist mode, the assist control section 33 reduces the assist force in the H direction corresponding to the displacement. Thereby, when the tank T contacts the vehicle body W, the reaction force can be given to the worker MS who operates the operation lever 16. The worker MS can sense that tank T touches the vehicle body W and the like, because the force to operate the operation lever 16 becomes heavy.

The deadman switch 18 is a three position switch. When the switch lever is operated by a proper force, the deadman switch 18 is in the on (closed) state. When the switch lever is not operated and tightly grasped, the deadman switch 18 is in the off (open) state. Even if the mode changeover switch MS is set to the assist mode side, when a deadman switch 18 is in the off (open) state, the assist control section 33 stops feeding electric power to each of the drive motors 9, 10, 11, so as to stop feeding the work assist force (assist force).

The operation/display panel section 34 comprises various kinds of operation switches (for example an emergency stop push-button switch, an abnormality reset push-button switch, an operation preparation switch, a switch for switching teaching mode, panel operation mode and remote control mode, and the like) in addition to the completion switch KS and the mode changeover switch MS. The operation/display panel section 34 also comprises various state indicators composed of lamps for indicating the operation state, a character display device and the like. The control state in the travel control section 31 is fed to the operation/display panel section 34 via the operation control section 32, so as to be displayed.

The parts conveying/mounting device 1 comprises a connection connector 51 to be connected with a teaching pendant 50. The assist control section 33 comprises a communication function to communicate with the teaching pendant 50. Thus, the moving operation of the tank support mechanism 8 can be taught and set by using the teaching pendant 50.

Figure 6 to Figure 8 are flow charts showing operation contents in each of the steps of a parts conveying/mounting method according to the present invention. In step S1, the parts conveying/mounting device 1 is assumed to be self-traveling toward the parts reception position SP. When the tank take-out area entry detecting means SK detects the entry of a person into the tank take-out area TA (step S2), the parts conveying/mounting device 1 stops traveling (step S3).

The worker SS of the sub-step performs a small assembly operation for taking out the tank in the tank take-out area TA, and presets (mounts) the tank T on the tank placing base (parts feeding section) 8 (step S4). When worker SS goes out of the tank take-out area TA and depresses the completion switch KB (step S5), the parts conveying/mounting device 1 starts traveling (step S6). Thereby, the parts conveying/mounting device 1 is in the state of self-traveling on the return path (step S7). When the reaching of a parts stop position SP is detected by the stop/junction point magnetic sensor 43 (step S8), the parts conveying/mounting device 1 stops traveling (step S9).

At the parts stop position SP, the parts conveying/mounting device 1 automatically operates an assist servo, and moves the arm 7 upwards (step S10) to move upward the tank support mechanism 8 which is in a lowered state. Thereby, the parts conveying/mounting device 1 receives the tank T preset (mounted) on the tank placing base (parts feeding section) 8 (step S11). When receiving the tank T, the parts conveying/mounting device 1 stops the assist servo (step S12), and starts traveling (step S13).

The parts conveying/mounting device 1 irradiates a laser beam to the front part in the travel direction by means of the laser scanner sensor 27 while scanning the laser beam, thereby detecting an obstacle and measuring the distance to the obstacle on the basis of the light reflected by the obstacle. When an obstacle is detected in step S14, the distance to the obstacle is determined in step S15. When the distance to the obstacle is no less than 50 cm, the travel speed is reduced (step S16). When the distance to the obstacle is less than 50 cm, the travel is stopped (step S17).

When there is no obstacle, and when the obstacle is removed, the parts conveying/mounting device 1 continues to travel (step S18). Thereby, the parts conveying/mounting device 1 self-travels at high speed toward the main line ML along the travel guiding route K (step S19). When the reaching of the stand-by position TP is detected by the stop/junction point magnetic sensor 43 (step S20), the parts conveying/mounting device 1 stops traveling (step S21). The parts conveying/mounting device 1, in the state of temporary stop at the stand-by position TP, turns the wheels to change the travel direction to the conveyance direction of the vehicle body W (step S22).

When passage of the vehicle body W is detected by the vehicle body passage photoelectric sensor WS (step S23), the parts conveying/mounting device 1 in the state of temporary stop at the stand-by position TP starts to travel synchronously with the vehicle body W (step S24). When starting the synchronous travel, the parts conveying/mounting device 1 may automatically operate the assist servo tomove the arm7 further upward from the position at the time of conveying the tank (at the time of traveling) , so that the tank T is brought closer to the tank mounting portion of the vehicle body W. Thereby, the moving amount for positioning in mounting the tank can be reduced, so that the positioning operation canbe more easily performed.

The main lineworkerMS switches the mode changeover switch MS of the parts conveying/mounting device 1 from the automatic side to the assistance side (step S25). When the worker MS grasps the grip section 17 (assist grip) of the operation lever 16 to put the deadman switch 18 provided for the grip section 17 (assist grip) into the on-state (step S26), the assist servo using each of the drive motors 9, 10, 11 as the actuator is put into operation (step S27). The operating force with which the worker MS operates the grip section 17 (assist grip) of the operation lever 16 is detected by the operation force sensor 19, so that the assist force in the operation direction is fed by each of the drive motors 9, 10, 11. Thereby, the worker MS can move the tank T placed on the tank support section 15 of the tank support mechanism 8 by light power.

When the workerMS positions the tank T at the tankmounting portion of the vehicle body W (step S28), and releases the hand from the grip section 17 (assist grip) to put the deadman switch 18 into the off-state (step S29), the assist servo is stopped (step S30). Even when the assist servo is stopped, the tank T is held at the positioned position, so that the worker MS can perform the tank mounting operation such as tightening operation of tank bolts in a state where both hands are free (step S31). After mounting the tank T to the vehicle body W, the worker MS grasps the grip section 17 (assist grip) to put the deadman switch 18 into the on-state (step S32). Thereby, the assist servo operates (step S33), so that the worker MS can move in the state of receiving the power assist the tank support mechanism (jig) 8 to the position where the tank support mechanism does not interfere with the vehicle body W (step S34).

Then, after moving the tank support mechanism (jig) 8 to the position where the tank support mechanism does not interfere with the vehicle body W, the worker MS releases the hand from the grip section 17 (assist grip) (step S35). By releasing the hand from the grip section 17 (assist grip), the deadman switch 18 is put into the off-state, so that the assist servo is stopped (step S36).

Next, the worker MS switches the mode changeover switch MS from the assistance side to the automatic side (step 37), and depresses the completion switch KS (step S38). When the completion switch KS is depressed, the parts conveying/mounting device 1 stops low-speed synchronous travel (step S39) continued up to that time (step S40).

When stopping the low-speed synchronous travel, the parts conveying/mounting device 1 starts self-traveling in the return direction in step S41. The parts conveying/mounting device 1 irradiates a laser beam to the front part in the return travel direction by the laser scanner sensor 27 for the return travel direction while scanning the laser beam, thereby detecting an obstacle and measuring the distance to the obstacle on the basis of the light reflected by the obstacle. When an obstacle is detected in step S42, the distance to the obstacle is determined in step S43. When the distance to the obstacle is no less than 50 cm, the travel speed is reduced (step S44). When the distance to the obstacle is less than 50 cm, the travel is stopped (step S45).

When there is no obstacle and when the obstacle is removed, the parts conveying/mounting device 1 continues to travel (step S46). Thereby, the parts conveying/mounting device 1 self-travels at high speed toward the stand-by position TP along the travel guiding route K (step S46). When the reaching of the stand-by position TP is detected by the stop/junction point magnetic sensor 43 (step S47), the parts conveying/mounting device 1 stops traveling at the stand-by position TP (step S48). The parts conveying/mounting device 1, in a state of temporary stop at the stand-by position TP, turns the wheels to change the travel direction to the direction toward the parts reception position SP (step S49).

When changing the travel direction, the parts conveying/mounting device 1 starts self-traveling in the return direction (step S50). Thereby, the parts conveying/mounting device 1 self-travels at high speed toward the parts reception position SP (step S51). When the reaching of the parts stop position SP is detected by the stop/junction point magnetic sensor 43 (step S52), the parts conveying/mounting device 1 stops traveling (step S53).

## Claims

1. A parts conveying/mounting method in which parts are conveyed from a parts feeding section to a vicinity of a mounting portion of a mounted body flowing on a production line and mounted to the mounting portion, comprising:
a parts reception process in which parts are received from the parts feeding section by parts support means;
an automatic conveyance process in which automatic conveyance means is operated to move the parts received in said parts reception process from said parts feeding section to the vicinity of said flowing mounted body, to move synchronously with the flow of said mounted body, and further to return to said parts feeding section after completion of mounting of the parts;
a parts approach process in which in said automatic conveyance process, conveyance means mounted to said automatic conveyance means and connected to the parts support means moves said parts to the vicinity of the mounting portion of said mounted body by automatic conveyance; and
a mounting process in which said parts moved to the vicinity of said mounted body in said parts approach process are made into contact with the mounting portion and fixed to the mounting portion by manually operating the conveyance means through assist conveyance.

2. A parts conveying/mounting device in which parts are conveyed to a vicinity of a mounting portion of a mounted body flowing on a production line from a parts feeding section and mounted to the mounting portion, comprising:
parts support means which freely supports said parts in a state sufficiently resistible to conveyance from the parts feeding section to the mounting portion of said mounted body;
first conveyance means constituted to travel on a floor surface of work place of a worker via an actuator and to bring said parts support means roughly in a vicinity of said parts to be mounted;
second conveyance means constituted to be connected with said parts support means and said first conveying means, to convey said parts support means to the mounting portion of said mounted body via an actuator; and
control means by which said first conveyance means is controlled to automatically move from said parts feeding section to the production line, to continue to move synchronously with the flow of the mounted body on the production line, and further to automatically move to said parts feeding section after completion of an operation to release the parts from said parts support means, by which the actuator is controlled to make said second conveyance means automatically move the parts supported by the parts support means to the vicinity of the mounting portion of the mounted body during conveyance performed by said first conveyancemeans synchronously with the flow of the mounted body, by which the actuator is controlled to make said parts support means automatically escape and move from the mounting portion of the parts to be mounted after completion of the operation to release the parts from the parts support means, and by which the actuator is further controlled to switch conveyance mode of the second conveyance means to an assist mode after the second conveyance means makes the parts support means automatically move to the vicinity of the parts to be mounted.
